# EUROPÄISCHE PATENTANMELDUNG

(11) **EP 3 893 067 A1**
(43) Veröffentlichungstag der Anmeldung: **13.10.2021**
(21) Anmeldenummer: 20168976.7
(22) Anmeldetag: 09.04.2020
(51) Int. Cl.: G05B 19/418, G05B 13/04

(54) **RECHNERGESTÜTZTES VERFAHREN UND ASSISTENZSYSTEM ZUR AUTOMATISIERTEN SPEZIFIKATION EINER ADVANCED PROCESS CONTROL- (APC-) LÖSUNG**

(71) Anmelder: Siemens Aktiengesellschaft, 80333 München (DE)
(72) Erfinder: John, Jean Pascal, 76137 Karlsruhe (DE); Labisch, Daniel, 76149 Karlsruhe (DE); Lorenz, Otmar, 76227 Karlsruhe (DE); Pfeiffer, Bernd-Markus, 91080 Uttenreuth (DE); Wolf, Gerrit, 76187 Karlsruhe (DE)

(57) **Zusammenfassung**

Um in einer vorhandenen verfahrenstechnischen Anlage ein erfolgreiches APC-Projekt zu initialisieren, muss eine passende Problemspezifikation definiert werden. Zur Spezifikation gehören eine Zielsetzung, die Auswahl von Ein- und Ausgangsvariablen sowie die Art der APC-Anwendung. In Frage kommen Mehrgrößenregler (z. B. modellbasierte prädiktive Regler, oder stationäre Arbeitspunktoptimierung (z. B. Universelle Datengetriebene Optimierung, UDO).

Durch die Erfindung wird die Spezifikation der APC-Lösung automatisiert, um so die Voraussetzungen für eine anschließende Implementierung der APC-Lösung zu schaffen.

## Beschreibung

Die Erfindung betrifft ein rechnergestütztes Verfahren zur automatisierten Spezifikation einer Advanced Process Control-(APC-) Lösung für eine verfahrenstechnische Einheit einer technischen Anlage.

Die Erfindung betrifft ferner ein Assistenzsystem zur automatisierten Spezifikation einer solchen Advanced Process Control- (APC-) Lösung.

Verfahrenstechnische Anlagen wie Produktionsanlagen der chemischen, petrochemischen und pharmazeutischen Industrie verfügen über ein Leitsystem, in dem Standardregelungen mit PID-Reglern für die Prozessführung eingebunden sind.

Es besteht das allgemeine Bedürfnis, die Wirtschaftlichkeit solcher Anlagen zu optimieren und Abweichungen einzelner Prozessgrößen von den Sollwerten und damit vom Betriebspunkt der Anlage zu vermindern, um die Fahrweise der Anlage zu beruhigen, Qualitätsanforderungen besser einzuhalten oder den Prozess näher an seinen Grenzen zu betreiben und den Durchsatz zu steigern.

Hierzu reicht in manchen Fällen die Automatisierung auf Basis von Einzelregelungen nicht aus. In diesen Fällen kann der Einsatz von Advanced Process Control (APC) helfen. Unter APC wird eine Vielzahl von Methoden zusammengefasst, die über die klassische Regelungstechnik hinausgehen.

Um in einer vorhandenen verfahrenstechnischen Anlage ein erfolgreiches APC-Projekt zu initialisieren, muss eine passende Problemspezifikation definiert werden. Zur Spezifikation gehören eine Zielsetzung, die Auswahl von Ein- und Ausgangsvariablen sowie die Art der APC-Anwendung. In Frage kommen Mehrgrößenregler (z. B. modellbasierte prädiktive Regler, MPC, [5.]) oder stationäre Arbeitspunktoptimierung (z. B. Universelle Datengetriebene Optimierung, UDO, [1.], [2.]). Gesucht sind potentielle Entscheidungsvariablen (Manipulated Variables, MV), über die eine APC-Applikation in den Prozess, beispielsweise auf die Sollwerte (Setpoints SP) unterlagerter PID-Regelungen, eingreifen kann, potentielle Prozess-Ausgangsvariablen (Process Variables, PV) bzw. Regelgrößen (Controlled Variables, CV) für die APC-Anwendung, sowie messbare Störgrößen (Disturbance Variables, DV). Der Begriff CV ist im Kontext von MPC-Anwendungen üblich, der Begriff PV allgemein für die Ausgangsgröße eines Prozesses. Im Folgenden werden die beiden Begriffe PV und CV synonym verwendet.

Die Problemspezifikation wird bisher meist in einem Dialog verschiedener Experten von Seiten des Anlagenbetreibers und des APC-Lösungsanbieters erarbeitet. Dazu sind sowohl verfahrenstechnisches und operatives Prozess-Know-How als auch APC-Methodenkompetenz erforderlich. Außerdem müssen firmenvertrauliche Informationen ausgetauscht werden. Es ist nicht sichergestellt, dass wirklich alle relevanten Variablen entdeckt werden. So können indirekte äußere Einflüsse, beispielsweise aus Versorgungsprozessen, leicht übersehen werden.

Der Erfindung liegt daher die Aufgabe zugrunde, die Spezifikation einer APC-Lösung zu automatisieren, um die Voraussetzungen für eine anschließende Implementierung zu schaffen.

Gemäß der Erfindung wird die Aufgabe durch das in Anspruch 1 angegebene Verfahren und das in Anspruch 2 angegebene Assistenzsystem gelöst.

Gegenstand der Erfindung ist somit ein rechnergestütztes Verfahren zur automatisierten Spezifikation einer Advanced Process Control-Lösung für eine verfahrenstechnische Einheit einer technischen Anlage mit folgenden Schritten:
- Bereitstellen eines maschinenlesbaren R&I-Fließschemas eines die verfahrenstechnische Einheit beinhaltenden Teils der technischen Anlage;
- Bereitstellen von historischen Messdaten aus einem Produktionsbetrieb der Anlage in einem Archiv,
- Identifizieren von in dem R&I-Fließschema enthaltenen Einzelregelkreisen;
- Ermitteln von Gütewerten der Einzelregelkreise, d. h. Werten für die Regelkreisgüte, mit einem Verfahren zur Regelkreisanalyse und anhand der historischen Messdaten;
- Vergleichen der Gütewerte mit Schwellenwerten für eine Mindestgüte;
- Ermitteln von stationären Zuständen des die verfahrenstechnische Einheit beinhaltenden Teils der technischen Anlage anhand der historischen Messdaten und Ermitteln des zeitlichen Anteils der stationären Zustände an der Gesamtdauer des betrachteten historischen Zeitraums;
- Erstellen eines statischen Prozessmodells für eine stationäre Arbeitspunktoptimierung, wenn die für die Regelkreisgüte der Einzelregelkreise ermittelten Werte die Schwellenwerte für eine Mindestgüte überschreiten und der zeitliche Anteil der stationären Zustände an der Gesamtdauer des betrachteten historischen Zeitraums einen Schwellenwert erreicht oder überschreitet;
- Erstellen eines dynamischen Prozessmodells für einen Mehrgrößenregler, wenn zumindest ein Teil der ermittelten Werte die Schwellenwerte für die Mindestgüte unterschreiten oder wenn der zeitliche Anteil der stationären Zustände an der Gesamtdauer des betrachteten historischen Zeitraums den Schwellenwert unterschreitet.

Gegenstand der Erfindung ist ferner ein Assistenzsystem zur automatisierten Spezifikation einer Advanced Process Control-(APC-) Lösung für eine verfahrenstechnische Einheit (Unit) einer technischen Anlage
- mit einer Schnittstelle zum Einlesen eines maschinenlesbaren R&I-Fließschemas eines die verfahrenstechnische Einheit beinhaltenden Teils der technischen Anlage,
- mit einer Schnittstelle zum Einlesen von historischen Messdaten aus einem Produktionsbetrieb der Anlage in einem Archiv,
- mit einer Auswerteeinrichtung, die dazu ausgebildet ist,
   - von in dem eingelesenen R&I-Fließschema enthaltene Einzelregelkreise zu identifizieren,
   - Gütewerte der identifizierten Einzelregelkreise mit einem Verfahren zur Regelkreisanalyse und anhand der historischen Messdaten zu ermitteln,
   - Die ermittelten Gütewerte mit Schwellenwerten für eine Mindestgüte zu vergleichen,
   - stationäre Zustände des die verfahrenstechnische Einheit beinhaltenden Teils der technischen Anlage anhand der historischen Messdaten und den zeitlichen Anteil der stationären Zustände an der Gesamtdauer des betrachteten historischen Zeitraums zu ermitteln, und
- mit einem Modellierer zum
   - Erstellen eines statischen Prozessmodells für eine stationäre Arbeitspunktoptimierung, wenn die für die Regelkreisgüte der Einzelregelkreise ermittelten Werte die Schwellenwerte für eine Mindestgüte überschreiten und der zeitliche Anteil der stationären Zustände an der Gesamtdauer des betrachteten historischen Zeitraums einen Schwellenwert erreicht oder überschreitet, oder
   - Erstellen eines dynamischen Prozessmodells für einen Mehrgrößenregler, wenn zumindest ein Teil der ermittelten Werte die Schwellenwerte für die Mindestgüte unterschreiten oder wenn der zeitliche Anteil der stationären Zustände an der Gesamtdauer des betrachteten historischen Zeitraums den Schwellenwert unterschreitet.

Im Weiteren wird die Erfindung beispielhaft anhand der Figuren der Zeichnung erläutert; im Einzelnen zeigen:
- Fig. 1: das Grundprinzip einer modellbasierten prädiktiven Mehrgrößenregelung,
- Fig. 2: das Grundprinzip einer universellen datengetriebenen Arbeitspunktoptimierung,
- Fig. 3: ein Beispiel für eine prozesstechnische Anlage,
- Fig. 4: ein Ablaufdiagramm einer automatischen Spezifikation für APC-Verfahren,
- Fig. 5: ein Beispiel für eine automatische Auswahl der für die APC-Lösung potentiellen Variablen aus einem R&I-Fließschema, und
- Fig. 6: ein R&I-Fließschema im Bereich einer Destillationskolonne einer Chemieanlage.

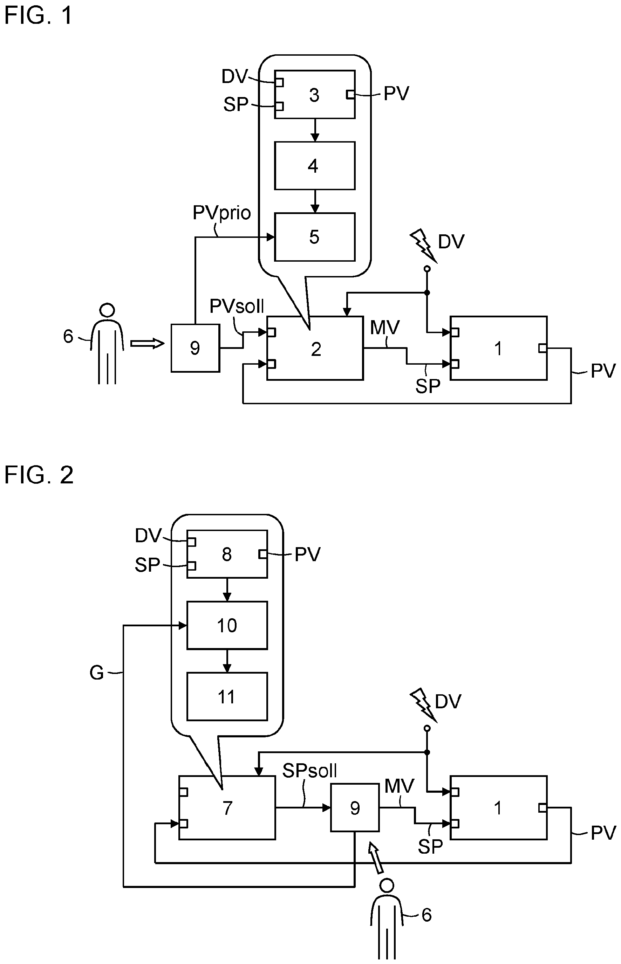

Fig. 1 zeigt beispielhaft das Grundprinzip einer modellbasierten prädiktiven Mehrgrößenregelung eines Prozesses 1 in einer technischen Anlage. Ein modellbasierter prädiktiver Regler (MPC) 2 enthält ein dynamisches Prozessmodell 3, in dem die wesentlichen Merkmale des Prozesses 1 hinterlegt sind. Als Eingangsgrößen werden Sollwerte SP unterlagerter Regelkreise und messbare Störungen DV verwendet. Ausgangsgrößen des Modells 3 sind die Regelgrößen oder Prozessvariablen PV. Mittels eines Prädiktors 4 werden anhand von vorangegangenen Messdaten für jeden Regelungszeitpunkt der aktuelle Zustand des Modells 3 geschätzt und der zukünftige Verlauf der Prozessvariablen PV vorhergesagt. Ein Optimierer 5 berechnet die Entscheidungsvariablen MV und damit die Stellgrößen SP zur Beeinflussung des Prozesses 1 in der Weise, dass vorgegebene Ziele bestmöglich erreicht werden. Die Ziele der Optimierung sind in einer Kostenfunktion hinterlegt und können unmittelbar an die Bedürfnisse des Anwenders 6 angepasst werden. Neben Sollwerten PVsoll für die Prozessvariablen PV können zusätzlich noch Randbedingungen, Grenzwerte oder Priorisierungen PVprio von Prozessvariablen vorgegeben werden.

Fig. 2 zeigt beispielhaft das Grundprinzip einer sog. universellen datengetriebenen Optimierung (UDO), wie sie beispielsweise aus [1.] bekannt ist. Ein Prozessoptimierer 7 zur stationären Arbeitspunktoptimierung enthält ein nichtlineares statisches Prozessmodell 8, das den Prozess 1 in einem stationären Zustand beschreibt. Als Eingangsgrößen des Prozessmodells 8 werden alle Prozessgrößen verwendet, die von dem Anwender 6 direkt über Sollwertvorgaben SP geändert werden können und daher als Entscheidungsvariablen MV betrachtet werden. Ebenfalls als Eingangsgrößen werden alle Größen betrachtet, die den Prozess 1 beeinflussen und messtechnisch erfassbar sind, jedoch vom Anlagenfahrer 6 nicht geändert werden können, d. h. messbare Störgrößen DV. Als Ausgangsgrößen werden alle Größen bzw. Prozessvariablen PV betrachtet, die sich in Abhängigkeit von den Entscheidungsvariablen SP und Störgrößen DV ändern. Das Prozessmodell 8 wird schrittweise während der Optimierung aus den aktuellen Messdaten bestimmt. Wenn die Modellgüte ausreichend ist, kann der Anwender 6 über eine Eingabe- und Auswahleinrichtung 9 ein beliebiges Optimierungsziel in Form eines zu optimierenden Gütekriteriums G vorgeben. Das Gütekriterium G kann aus den Entscheidungsvariablen MV bzw. SP und beliebigen messbaren Prozessvariablen PV sowie Störgrößen DV gebildet werden, wobei die mathematische Form des Gütekriteriums G nicht eingeschränkt ist. Anhand des in einer Einheit 10 für die Optimierung umgeformten Gütekriteriums G werden durch einen Optimierer 11 unter Berücksichtigung von konstanten Grenzen für alle Entscheidungsvariablen SP und Prozessausgänge PV sowie unter Berücksichtigung von linearen und nichtlinearen Nebenbedingungen für die Entscheidungsvariablen neue Sollwerte für die Entscheidungsvariablen SP berechnet und zunächst als Vorschlag SPsoll ausgegeben. Die Sollwerte können von dem Anwender 6 über die Eingabe- und Auswahleinrichtung 9 ggf. korrigiert und an den Prozess 1 übertragen oder abgelehnt werden.

Ein grundlegendes Prinzip der datengetriebenen Optimierung ist, dass sie schrittweise, also sequentiell arbeitet. D. h. es werden zunächst aktuelle Messwerte vom Prozess 1 eingelesen, mit denen ein Datensatz erstellt wird. Anschließend erfolgt die Modellierung auf Basis aller aufgenommenen Datensätze und daraufhin die Optimierung, bei der ein neuer Sollwertvorschlag SPsoll generiert wird. Nachdem dieser an den Prozess 1 weitergeleitet worden ist, muss gewartet werden, bis der Prozess 1 wieder eingeschwungen ist, d. h., bis ein stationärer Zustand erreicht worden ist. Anschließend wird ein neuer Datensatz eingelesen. Typischerweise wird im laufenden Betrieb nach 20 bis 50 Iterationsschritten ein lokales Optimum erreicht, das einen signifikant besseren Wert des Gütekriteriums G aufweist als der ursprüngliche Arbeitspunkt der technischen Anlage.

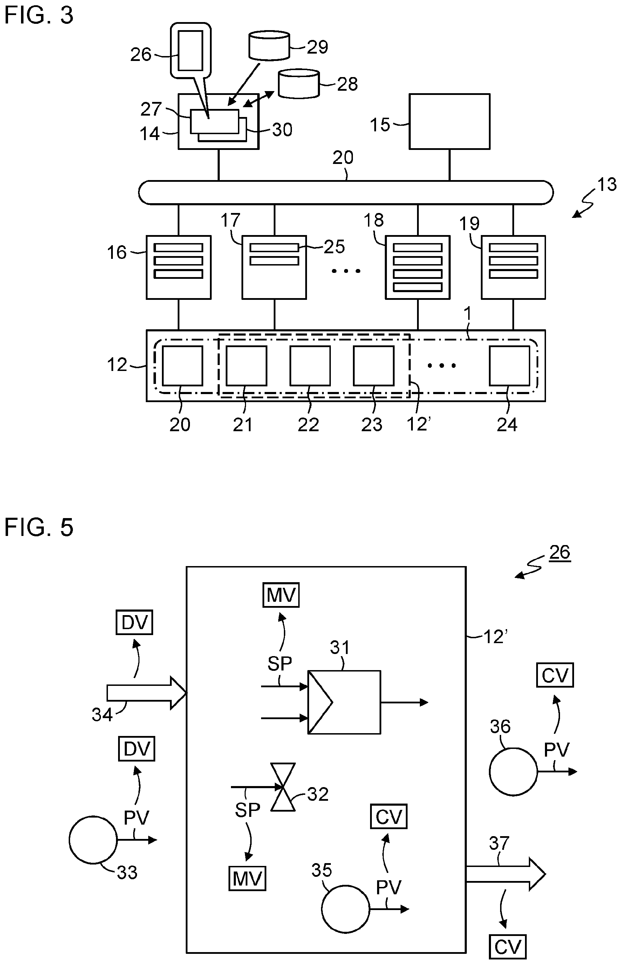

Fig. 3 zeigt in vereinfachter schematischer Darstellung ein Beispiel für eine prozesstechnische Anlage 12, in der der Prozess 1 mittels eines Automatisierungssystems 13 gesteuert wird. Das Automatisierungssystem 13 enthält ein Planungs- und Engineering-System 14, ein Bedien- und Beobachtungssystem 15, eine Vielzahl von Automatisierungsgeräten 16, 17, 18, 19 und eine Vielzahl von Feldgeräten 20, 21, 22, 23, 24. Das Planungs- und Engineering-System 14, das Bedien- und Beobachtungssystem 15 und die Automatisierungsgeräte 16, 17, 18, 19 sind über ein Bussystem 19 miteinander verbunden. Die Feldgeräte 20, 21, 22, 23, 24 sind auf unterschiedliche Weise, z. B. unmittelbar, über Feldbusse oder eine dezentrale Peripherie an den Automatisierungsgeräten 16, 17, 18, 19 angeschlossen und nehmen in dem Prozess 1 vorgegebene Mess-, Steuer- und Regelungsfunktionen wahr, indem sie als Sensoren Messwerte von Prozessgrößen erfassen und als Aktoren durch Stelleingriffe auf den Prozess einwirken. Typische Sensoren sind Messumformer für Füllstand, Durchfluss, Druck und Temperatur, Analysengeräte für Gas- oder Flüssigkeitsanalyse und Wägesysteme. Typische Aktoren sind Stellantriebe, Stellungsregler für Ventile, sonstige dezentrale Regler und Frequenzumrichter für elektromotorische Antriebe von, z. B., Pumpen, Heizungen, Kühlungen usw. Die Automatisierungsgeräte 16, 17, 18, 19 greifen schreibend und lesend auf die Feldgeräte 20, 21, 22, 23, 24 zu und steuern dabei den Prozess 1 nach Maßgabe eines Steuerprogramms, das aus einer Vielzahl von in Wechselwirkung stehenden und über die Automatisierungsgeräte verteilten Automatisierungs-Funktionsbausteinen 25 besteht.

Um in einer vorhandenen verfahrenstechnischen Anlage ein erfolgreiches APC-Projekt zu initialisieren, muss, wie im allgemeinen Beschreibungsteil der vorliegenden Anmeldung bereits erwähnt, eine passende Problemspezifikation definiert werden.

Ausgangspunkt für die erfindungsgemäße automatisierte Problemspezifikation ist ein maschinenlesbares R&I-Fließschema (Rohrleitungs- und Instrumentierungsfließschema) 26, das mittels eines Planungs- und Engineering-Software-Tools 27, z. B. COMOS der Siemens AG, erstellt wird und in dem alle relevanten Komponenten der Anlage 12 und der Automatisierung als graphische Objekte erkennbar sind. Die Eigenschaften der Objekte sind in Form von Attributen in einer Datenbank 28 abgelegt, ebenso wie Verbindungen zwischen Objekten in Form von Materialflüssen, z. B. Rohrleitungen, und Signalflüssen, z. B. Messwerte.

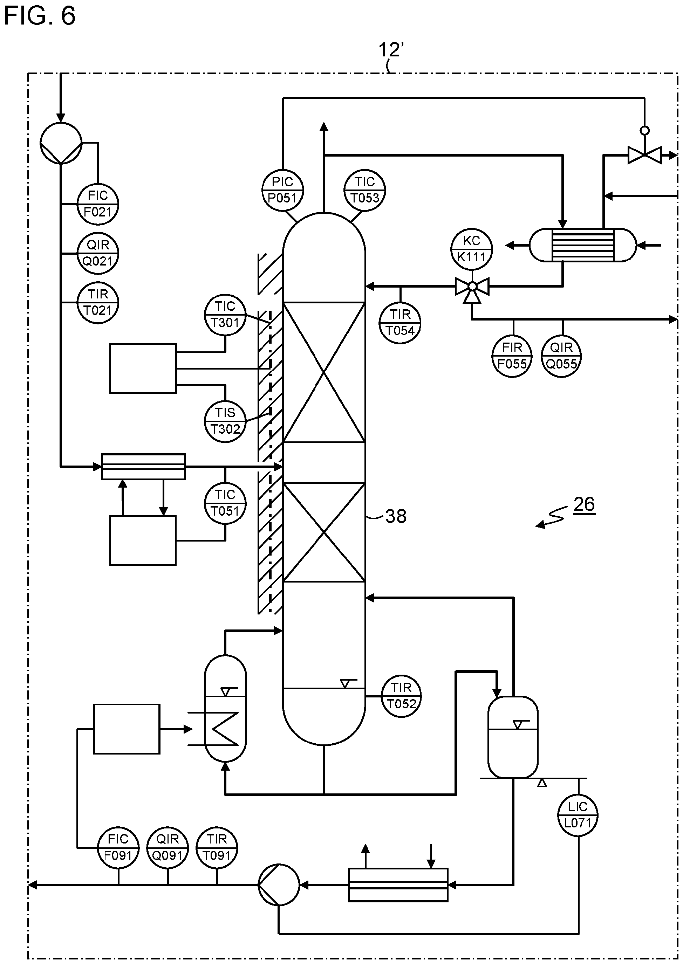

Dabei sind auch Informationen über alle Mess- und Stellgrößen der jeweiligen Komponenten enthalten. Betrachtungsgegenstand ist meist eine verfahrenstechnische Einheit (Unit) 12' der Anlage 12, wie z. B. ein Reaktor, eine Kolonne usw. Die Gliederung der Anlage 12 in Units ist üblicherweise bereits in verfahrenstechnischen CAE-Tools (Computer-Aided Engineering) oder in der technologischen Hierarchie des Prozessleitsystems definiert. Fig. 6, auf die weiter unten noch Bezug genommen wird, zeigt beispielhaft das R&I-Fließschema einer Unit einer Chemieanlage.

Weiterhin werden historische Messdaten aus dem Produktionsbetrieb der Anlage 12 aus einem Archiv 29 (z. B. Cloud) bereitgestellt. Dabei sollten alle Variablen erfasst werden, die für die betrachtete Unit 12' relevant sein könnten. Die Daten sollten einen hinreichend langen Zeitraum, beispielsweise einen Monat, umfassen, so dass alle für den Produktionsbetrieb relevanten Arbeitspunkte oder Fahrweisen enthalten sind. Sie sollten mit einer konstanten Abtastzeit erfasst werden, die dem Zyklus der schnellsten PID-Regelkreise der betrachteten Unit entspricht, und ohne Datenkompression verarbeitet werden. Falls im Umfeld der Unit 12' Laborproben entnommen werden, sollen diese Daten ebenfalls bereitgestellt werden, auch wenn sie nicht äquidistant und im schnellen Zyklus vorliegen. Ausnahmezustände im Anlagenbetrieb des betrachteten Aufzeichnungszeitraums (z. B. Wartungsarbeiten, Produktqualität au-ßerhalb der Spezifikation) sind zu dokumentieren.

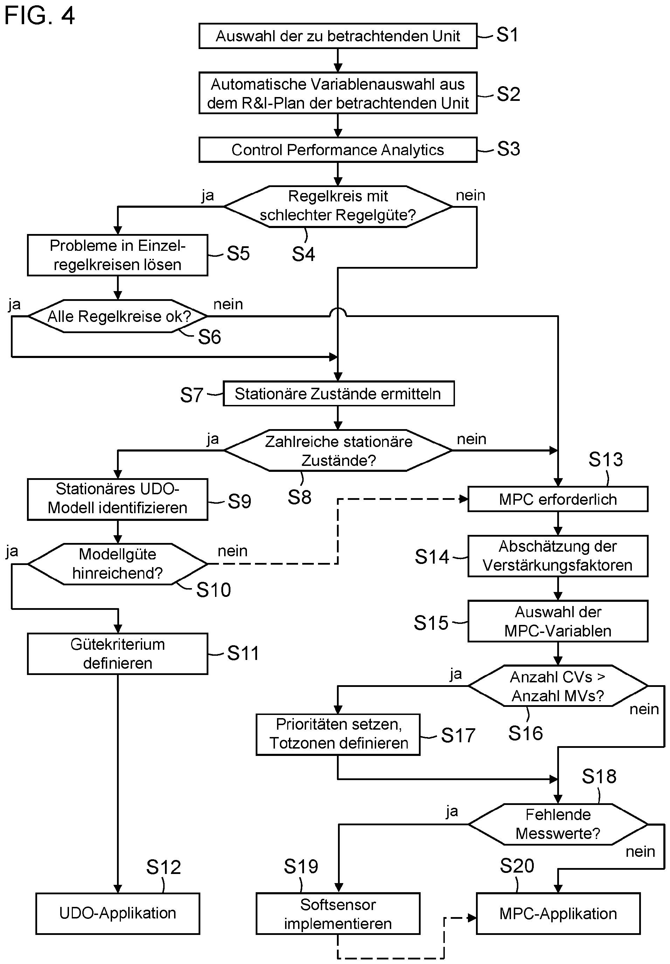

Wie im Folgenden anhand eines Ablaufdiagramms in Fig. 4 erläutert wird, werden zur automatischen Problemspezifikation von einem Software-Tool 30 (Fig. 3) folgende Schritte durchlaufen:
S1: Auswahl der Unit 12', für die die automatischen Problemspezifikation durchgeführt werden soll.
S2: Automatische Variablenauswahl der für die APC-Lösung potentiellen Entscheidungsvariablen (Manipulated Variables) MV, Störgrößen (Disturbance Variables) DV, und Prozess-Ausgangsvariablen (Process Variables) PV oder synonym Regelgrößen (Controlled Variables) CV aus dem R&I-Fließschema 26 (die Auswahlkriterien sind in Fig 5 veranschaulicht):
   - Die Sollwerte SP aller Regler 31 bzw. Regelkreise der Unit 12' in dem R&I-Fließschema 26 sind potentielle Entscheidungsvariablen MV.
   - Alle Sollwerte SP von Stellgliedern 32 (z. B. Pumpen mit variabler Drehzahl, Stetig-Ventile, Heizungen/Kühlungen), die noch nicht mit einem Regler verbunden sind, sind potentielle Entscheidungsvariablen MV.
   - Alle Messwerte PV von Sensoren 33 (z. B. für Durchfluss, Konzentration, Temperatur) in einer Zuleitung, die der Unit 12' Material zuführt, oder in einer vorgelagerten Unit (z. B. einem der Unit 12' vorgelagerten Behälter, Tank, Kessel), die nicht bereits als Regelgröße in einen Regelkreis eingebunden sind, sind potentielle Störgrößen DV.
   - Alle Messwerte 34, die sich auf Rohstoffe oder Umgebungsbedingungen beziehen, sind potentielle Störgrößen DV.
   - Alle Messwerte PV von Sensoren 35 der Unit 12', die nicht bereits in einen Regelkreis eingebunden sind, sind potentielle Regelgrößen CV.
   - Alle Messwerte PV von Sensoren 36 (z. B. für Durchfluss, Konzentration, Temperatur) in einer Abflussleitung oder in einer nachgelagerten Unit (z. B. einem der Unit 12' nachgelagerten Behälter, Tank, Kessel), die nicht bereits in einen Regelkreis eingebunden sind, sind potentielle Regelgrößen CV.
   - Alle Messwerte 37, die sich auf das Produkt beziehen (z. B. Qualitätsmessung), sind potentielle Regelgrößen CV, sofern sie zeitnah erfasst werden und eindeutig der betrachteten Unit 12' zugeordnet werden können.

Die automatische Variablenauswahl erfolgt durch Abfragen an die Datenbank 28, in der die Informationen des maschinenlesbaren R&I-Fließschemas 26 abgelegt sind. Im Fall von COMOS kann hierzu das vorhandene API (Application Programming Interface) genutzt werden.

### Auswahl der APC-Methode:

S3: Untersuchung der vorliegenden historischen Messdaten mit einem Verfahren zur Regelkreisanalyse, z. B. Siemens Cloud-Service CPA (Control Performance Analytics [4.]).
S4: Überprüfen, ob in der Unit 12' Regelkreise mit schlechter Regelgüte vorhanden sind.
S5: Falls es bei vorhandenen PID-Regelkreisen der Unit 12' erhebliche Probleme gibt, weil z. B. Regelkreise schwingen oder überwiegend im Handbetrieb sind, sind diese Problem zunächst zu lösen, bevor eine APC-Lösung darauf aufsetzen kann.
S6: Falls einzelne dieser Regelungsprobleme allein auf der Ebene der Einzelregelkreise nicht lösbar sind, weil es zu starke Verkopplungen zwischen verschiedenen Regelkreisen gibt, ist ein Mehrgrößenregler (z. B. MPC) für die betroffenen Regelkreise erforderlich (-> Schritt S13).
   In ähnlicher Weise kann mit weiteren datenbasierten Applikationen zur Überwachung von Anlagenkomponenten verfahren werden, z. B. mit einer Ventilüberwachung: Untersuchung aller Ventile der Anlage, ggf. Lösung gefundener Probleme vor einer Fortsetzung der APC-Spezifikation.
S7: Wenn alle Regelkreise problemlos sind, wird in den historischen Messdaten z. B. mit dem aus [3.] bekannten Verfahren nach stationären Zuständen gesucht.
S8: Wenn es zahlreiche stationäre Zustände und nur geringe Zeitanteile mit starken Prozessschwankungen gibt, wird eine Arbeitspunktoptimierung als APC-Methode empfohlen (-> Schritt S9). Für die Auswertung kann beispielsweise als Verhältnis der Zeit, in der der Prozess stationär ist, zur Gesamtzeit der Messdaten gebildet werden. Bei Überschreiten eines Grenzwerts, beispielsweise 50%, erfolgt die Auswahl der Arbeitspunktoptimierung. Falls es keine definierten stationären Zustände gibt, ist das primäre Ziel der APC-Lösung die Stabilisierung der Prozessführung mit einem Mehrgrößenregler (-> Schritt S13).
S9: Für die Arbeitspunktoptimierung wird beispielsweise mit dem aus [1.] bekannten Verfahren automatisch ein stationäres Prozessmodell 8 (vgl. Fig. 2) mit allen ausgewählten Entscheidungsvariablen MV und Störgrößen DV als Eingangsgrößen erstellt.
S10: Die Modellgüte des stationären Prozessmodells 8 wird für alle Prozess-Ausgangsvariablen PV geprüft.
S11: Falls die Modellgüte ausreichend ist, kann eine beliebige Formel aus Regelgrößen CV, Entscheidungsgrößen MV und Störgrößen DV als Gütekriterium G (Fig. 2) (siehe weiter unten: "Gütekriterium für Optimierung") definiert werden. In Frage kommen beispielsweise Durchsatz oder Ausbeute (zu maximieren), spezifischer Energie-/Ressourcenverbrauch bezogen auf den Durchsatz (zu minimieren) oder wirtschaftlicher Ertrag des Anlagenbetriebs pro Zeiteinheit (zu maximieren). Die endgültige Entscheidung darüber liegt beim Anlagenbetreiber 6.
S12: Anwendung der stationäre Arbeitspunktoptimierung.
S13: Falls es in den historischen Messdaten keine definierten stationären Zustände gibt (Schritt S8), ist das primäre Ziel der APC-Lösung die Stabilisierung der Prozessführung mit einem Mehrgrößenregler 2 (Fig. 1).
S14: Um ohne stationäre Messdaten eine erste Abschätzung der stationären Verstärkungsfaktoren der Übertragungsfunktionen zu gewinnen, können zwei alternative Modellierungsverfahren angewendet und dasjenige Modell ausgewählt werden, das die höhere Modellgüte im Sinne der Minimierung der Fehlerquadratsumme liefert:
   (1) Identifikation eines linearen dynamischen Mehrgrößenmodells (z. B. mit einem MPC-Konfigurator) und
   (2) Identifikation eines nichtlinearen stationären Prozessmodells (z. B. mit einem UDO-Offline-Tool) nach Glättung der historischen Daten mit einem langsamen Tiefpassfilter.
S15: Alle Entscheidungsvariablen MV und Störgrößen DV, die mit spürbaren stationären Verstärkungsfaktoren (normiert auf den Wertebereich der jeweiligen Variablen) in das Prozessmodell 3 eingehen, werden für einen Mehrgrößenregler herangezogen. Alle Regelgrößen CV, für die es mindestens einen wirksamen (mit spürbarem Verstärkungsfaktor) Stelleingriff MV gibt, können für den Mehrgrößenregler 2 in Betracht gezogen werden. S16: Korrekturen an der Variablenauswahl sind erforderlich, wenn es mehr potentielle Regelgrößen CV als Entscheidungsgrößen MV gibt.
S17: Dann muss entschieden werden, welche Regelgrößen CV wirklich auf einen exakten Sollwert geregelt und welche nur auf Ober-/Untergrenzen überwacht werden sollen.
S18: Überprüfung auf fehlende Messwerte von ausgewählten Variablen.
S19: Falls für die Prozessführung maßgebliche Größen überhaupt nicht online, sondern nur sporadisch im Labor gemessen werden (beispielsweise, wenn es keine kontinuierliche Messgröße mit Bezug zur Produktqualität auf der Ausgangsseite der Unit gibt), ist die Implementierung eines Soft-Sensors [6.] Voraussetzung für weitere APC-Maßnahmen.
S20: Anwendung der Mehrgrößenregelung.

Die automatisch ermittelte Vorabauswahl von Regelgrößen CV für den Mehrgrößenregler 2 kann von dem Anwender 6 priorisiert werden, wobei auch ein "unwichtig" möglich ist.

Auch wenn als APC-Methode ein Mehrgrößenregler ausgewählt worden ist, kann es sinnvoll sein, das Ziel der Prozessführung in Form eines quantifizierbaren Gütekriteriums zu definieren (siehe unten: "Gütekriterium für Optimierung"). Wenn die MPC-Applikation in Betrieb genommen ist, gibt es mehrere Möglichkeiten, sie zur Optimierung der Prozessführung zu nutzen, z. B. durch Vorgabe von Sollwerten, die näher an Beschränkungen liegen (Prozess "ausreizen"), Vorgabe von Zielwerten für kostenintensive Entscheidungsvariablen MV, Nutzung der in den MPC integrierten Arbeitspunktoptimierung oder Kombination des MPC mit einer überlagerten Arbeitspunktoptimierung.

### Integration von Betreiberwissen:

Werden Details vom Anlagenbetreiber benötigt, so werden standardisierte Fragen verwendet, deren Antworten automatisiert genutzt werden können.

Insbesondere liegt die Festlegung von endgültigen Grenzwerten für jede APC-Lösung in der Verantwortung des Anlagenbetreibers und kann nicht vollständig automatisiert werden. Als Default für die Grenzwerte werden die Minima und Maxima der bereitgestellten historischen Daten verwendet.

Falls es Labormessungen in den Messdaten gibt, kann automatisch die Frage gestellt werden, ob eine Teilmenge dieser Größen kontinuierlich bestimmt oder geregelt werden soll. Falls ja, ist hierfür die Implementierung eines Soft-Sensors erforderlich, z. B. eines Kalman-Filters oder eines künstlichen neuronalen Netzes.

### Gütekriterium für Optimierung:

Für die Definition eines Gütekriteriums zur Optimierung wird abgefragt, welche Variablen maximiert, minimiert oder auf einen festen Wert gebracht werden sollen.

Bei bestimmten Arten von Variablen kann eine sinnvolle Vorbelegung der Optimierungsrichtung bereitgestellt werden. Alle Variablen, die mit Kosten oder Ressourcenverbrauch einhergehen, sollen typischerweise minimiert werden. Alle Variablen, die mit Erlösen oder Produktionsmenge (Durchsatz) zu tun haben, sollen typischerweise maximiert werden.

Für das Kriterium können auch beliebige nichtlineare Abbildungen von Variablen verwendet werden. Zusätzlich kann jede Variable entsprechend ihrer Bedeutung für den Anlagenbetrieb gewichtet werden.

Die Einzelvariablen werden mit der Gewichtung multipliziert und zu einem Gesamtkriterium addiert. Zu maximierende Kriterien werden jeweils mit -1 multipliziert. Das sich ergebende skalare Gütekriterium ist unter Einhaltung der Grenzwerte zu minimieren.

Anhand von Fig. 6 wird im Folgenden die automatisierte Problemspezifikation für eine APC-Lösung am Beispiel einer Anlage zur Trennung eines Gemischs aus Ethanol und Wasser, bestehend aus einer Destillationskolonne und einer Membran, erläutert. Das hier sehr vereinfacht dargestellte R&I-Fließschema 26 zeigt den Anlagenteil (Unit) 12' mit der Destillationskolonne 38. Die Messstellen sind nach der Norm EN 62424 bezeichnet, wobei der erste Buchstabe die Messgröße bezeichnet (F = Durchfluss, L = Füllstand, P = Druck, Q = Menge/Anzahl/Qualität, T = Temperatur) und die nachfolgenden Buchstaben Messwert-Verarbeitungsfunktionen bezeichnen (C = Regler, I = Anzeige, R = Speicherung, S = Schaltfunktion). An dem gezeigten Beispiel wird die erfindungsgemäße Abfolge der automatisch durchgeführten Schritte illustriert:
Automatische Variablenauswahl der für die APC-Lösung potentiellen Entscheidungsvariablen MV, Störgrößen DV und Regelgrößen CV aus dem R&I-Fließschema 26:
Die Sollwerte aller Regelkreise der Unit in dem R&I-Fließschema 26 sind potentielle Entscheidungsvariablen MV: FIC021, TIC051, TIC301, PIC051, LIC071, FIC091.

Die Sollwerte von Stellgliedern (Pumpen mit variabler Drehzahl, Stetig-Ventile, Heizungen/Kühlungen), die noch nicht mit einem Regler verbunden sind, sind Entscheidungsvariablen MV: KC111.

Jeder Sensor (z. B. für Durchfluss, Konzentration, Temperatur) in einer Zuleitung, die der Unit 12' Material zuführt oder im vorgelagerten Behälter (z. B. Tank, Kessel, vorgelagerte Unit), der nicht bereits in einen Regelkreis als Regelgröße eingebunden ist, ist ein potentieller DV: QIR021, TIR021.

Alle Messwerte, die sich auf Rohstoffe oder Umgebungsbedingungen beziehen, sind potentielle Störgrößen DV: hier keine.

Alle Messwerte der Unit 12', die nicht bereits in einen Regelkreis eingebunden sind, sind potentielle Regelgrößen CV: TIR052, TIC053, TIR054, QIR055, QIR091.

Jeder Sensor (z.B. für Durchfluss, Konzentration, Temperatur) in einer Abflussleitung oder im nachgelagerten Behälter (z.B. Tank, Kessel, nachgelagerte Unit), der nicht bereits in einen Regelkreis eingebunden ist, ist ein potentieller CV: FIR055, QIC055, TIR091, QIR091

Alle Messwerte, die sich auf das Produkt beziehen (z.B. Qualitätsmessung QIR055, QIR091), sind potentielle Regelgrößen CV, sofern sie zeitnah erfasst werden und eindeutig der betrachteten Unit zugeordnet werden können.

### Auswahl der APC-Methode:

Eine Untersuchung der vorliegenden historischen Messdaten mit einem Verfahren zur Regelkreisanalyse deckt einzelne Schwachstellen auf. Diese lassen sich durch Neu-Einstellung der PID-Parameter lösen. Im vorliegenden Beispiel wurden zwar solche Schwachstellen gefunden, aber außerhalb der betrachteten Unit 12'.

Damit lässt sich die Anlage in verschiedenen Arbeitspunkten stabilisieren. Es ist also nicht zwangsläufig ein Mehrgrößenregler erforderlich.

Jedoch stören sich einige der Regelkreise gegenseitig, sie sind also stark verkoppelt (z. B. FIC021 und TIC051). Außerdem sind starke Quereinflüsse von TIC051 auf TIC053 in den Daten erkennbar. Daher empfiehlt die vorgestellte Erfindung einen Mehrgrößenregler für diese Unit 12'.

Zum Entwurf des MPC werden, sofern geeignet, die vorhandenen Daten aller gefundener Regelgrößen CV, Störgrößen DV und Entscheidungsgrößen MV für eine dynamische Modellierung genutzt. Andernfalls werden gezielte Sprunganregungen der Entscheidungsvariablen MV und, falls möglich, der Störgrößen DV durchgeführt.

Mit Hilfe des dynamischen Modells wird der Mehrgrößenregler entworfen und anschließend im Betrieb evaluiert.

Mit der Erfindung wird es erstmals möglich, eine Tätigkeit hochgradig zu automatisieren, die bisher manuell von Experten durchgeführt worden ist.

Durch die Teilautomatisierung wird eine Kosteneinsparung bei diesem Teil der APC-Projektkosten erreicht. Außerdem wird eine reproduzierbare Qualität der APC-Problemspezifikation erreicht, unabhängig von der Qualifikation der verfügbaren Experten.

In diesem Dokument sind folgende Veröffentlichungen zitiert:
[1.] EP 3 104 240 A1
[2.] Pfeiffer, B-M., John, J. P.: Universelle datengetriebene Optimierung von Batch- und Konti-Prozessen. Industry Talks, Automation 2017, Baden-Baden.
[3.] WO 2008/145154 A1
[4.] Pfeiffer, B-M., Heck, Ch.: Cloud-basierter Service ermöglicht flexible Überwachung von Regelkreisen im Anlagenbetrieb. atp edition 05/2015, S. 18-21.
[5.] Pfeiffer, B-M., Grieb, H., Lorenz, O., Losert, D. Sack, D.: Einsatzmöglichkeiten Leitsystem-integrierter Prädiktivregler - "Unit Templates" für die chemische Industrie. atp edition 3/2014, S. 28-37.
[6.] Lohner, L., Pfeiffer, B-M., Krohlas, G.: Integration von sporadischen Labormessungen in ein Erweitertes Kalman-Filter zur Verbesserung der Schätzergebnisse unbekannter Prozessgrö-ßen. VDI-Kongress Automation 2012, Baden-Baden. VDI-Berichte 2171, S. 339-342, VDI-Verlag, Düsseldorf.

## Patentansprüche

1. Rechnergestütztes Verfahren zur automatisierten Spezifikation einer Advanced Process Control- (APC-) Lösung für eine verfahrenstechnische Einheit (12') einer technischen Anlage (12) mit folgenden Schritten:
- Bereitstellen eines maschinenlesbaren R&I-Fließschemas (26) eines die verfahrenstechnische Einheit (12') beinhaltenden Teils der technischen Anlage (12);
- Bereitstellen von historischen Messdaten aus einem Produktionsbetrieb der Anlage (12) in einem Archiv (29);
- Identifizieren von in dem R&I-Fließschema (26) enthaltenen Einzelregelkreisen;
- Ermitteln von Gütewerten der Einzelregelkreise mit einem Verfahren zur Regelkreisanalyse und anhand der historischen Messdaten;
- Vergleichen der Gütewerte mit Schwellenwerten für eine Mindestgüte;
- Ermitteln von stationären Zuständen des die verfahrenstechnische Einheit (12') beinhaltenden Teils der technischen Anlage (12) anhand der historischen Messdaten und Ermitteln des zeitlichen Anteils der stationären Zustände an der Gesamtdauer des betrachteten historischen Zeitraums;
- Erstellen eines statischen Prozessmodells (8) für eine stationäre Arbeitspunktoptimierung (7), wenn die für die Regelkreisgüte der Einzelregelkreise ermittelten Werte die Schwellenwerte für eine Mindestgüte überschreiten und der zeitliche Anteil der stationären Zustände an der Gesamtdauer des betrachteten historischen Zeitraums einen Schwellenwert erreicht oder überschreitet; oder
- Erstellen eines dynamischen Prozessmodells (3) für einen Mehrgrößenregler (2), wenn zumindest ein Teil der ermittelten Werte die Schwellenwerte für die Mindestgüte unterschreiten oder wenn der zeitliche Anteil der stationären Zustände an der Gesamtdauer des betrachteten historischen Zeitraums den Schwellenwert unterschreitet.

2. Assistenzsystem zur automatisierten Spezifikation einer Advanced Process Control- (APC-) Lösung für eine verfahrenstechnische Einheit (12') einer technischen Anlage (12)
- mit einer Schnittstelle zum Einlesen eines maschinenlesbaren R&I-Fließschemas (26) eines die verfahrenstechnische Einheit (12') beinhaltenden Teils der technischen Anlage (12),
- mit einer Schnittstelle zum Einlesen von historischen Messdaten aus einem Produktionsbetrieb der Anlage (12) in einem Archiv (29),
- mit einer Auswerteeinrichtung, die dazu ausgebildet ist,
- von in dem eingelesenen R&I-Fließschema (26) enthaltene Einzelregelkreise zu identifizieren,
- Gütewerte der identifizierten Einzelregelkreise mit einem Verfahren zur Regelkreisanalyse und anhand der historischen Messdaten zu ermitteln,
- die ermittelten Gütewerte mit Schwellenwerten für eine Mindestgüte zu vergleichen,
- stationäre Zustände des die verfahrenstechnische Einheit (12') beinhaltenden Teils der technischen Anlage (12) anhand der historischen Messdaten und den zeitlichen Anteil der stationären Zustände an der Gesamtdauer des betrachteten historischen Zeitraums zu ermitteln, und
- mit einem Modellierer zum
- Erstellen eines statischen Prozessmodells (8) für eine stationäre Arbeitspunktoptimierung (7), wenn die für die Regelkreisgüte der Einzelregelkreise ermittelten Werte die Schwellenwerte für eine Mindestgüte überschreiten und der zeitliche Anteil der stationären Zustände an der Gesamtdauer des betrachteten historischen Zeitraums einen Schwellenwert erreicht oder überschreitet, oder
- Erstellen eines dynamischen Prozessmodells (3) für einen Mehrgrößenregler (2), wenn zumindest ein Teil der ermittelten Werte die Schwellenwerte für die Mindestgüte unterschreiten oder wenn der zeitliche Anteil der stationären Zustände an der Gesamtdauer des betrachteten historischen Zeitraums den Schwellenwert unterschreitet.

3. Computerprogrammprodukt, das beim Ausführen mittels einer Datenverarbeitungseinrichtung ein Verfahren nach Anspruch 1 ausführt.
